# EUROPEAN PATENT APPLICATION

(11) **EP 1 947 719 A1**
(43) Date of publication of application: **23.07.2008**
(21) Application number: 06823151.3
(22) Date of filing: 08.11.2006
(51) Int. Cl.: H01M 4/96, B01J 35/08, H01M 4/88, H01M 4/90, H01M 8/10

(54) **ELECTRODE CATALYST FOR FUEL CELL AND METHOD FOR PRODUCING SAME**

(30) Priority: 09.11.2005 JP 2005355390
(71) Applicant: Shin-Etsu Chemical Company, Ltd., Tokyo 100-0004 (JP)
(72) Inventor: ZHANG, Shuguo,, Kyoto-shi, Kyoto 600-8813 (JP); OHYAGI, Shinsuke, Kyoto-shi, Kyoto 600-8813 (JP)
(74) Representative: Hössle Kudlek & Partner
(86) International application number: PCT/JP2006/322247
(87) International publication number: WO 2007/055229

(57) **Abstract**

Provided are an electrocatalyst for a fuel cell having a large amount of catalyst metal particles supported on a carbon support and maintaining a high-dispersity state and a method of preparing the same. The electrocatalyst is **characterized by** being composed of catalyst metal particles having a secondary structure composed of at least one kind of primary metal particles having a particle diameter of 0.1 to 1.5 nm, or the catalyst metal particles having a core-shell structure of which the core is composed of metal particles having a particle diameter of 2.0 nm or less, and carbon particles. The method of preparing the electrocatalyst, including a first loading step for producing the core of catalyst metal particles wherein distances between the particles are controlled to 2.0 nm or less on a support and a second loading step for growing the catalyst metal particles, enables the amount of metal loaded on the support to increase without causing aggregation of the catalyst metal particles in the end.

## Description

### Technical Field

The present invention relates to an electrocatalyst for a fuel cell and a method of preparing the same, and more specifically, relates to an electrocatalyst for a fuel cell loaded with catalyst metal particles having a high metal loading amount in a highly dispersed state and a method of preparing the same.

### Background Art

Fuel cells are noted as a power generating system for directly converting energy possessed by a fuel into electric energy, and are rapidly developed both at home and abroad. Generating only water as a product during power generation, the fuel cell has an advantage of not harming the environment. As a result, there are attempts to use the fuel cell for a domestic-use cogeneration and a drive power supply for an automobile, for example.

To improve a performance of the fuel cell, the use of a highly active catalyst is essential. For a catalyst metal of an electrocatalyst for a fuel cell, platinum is widely used because of its high catalytic activity. With the aim of improving the catalytic activity, research and development have been undertaken to increase a surface area of the catalyst metal, i.e., to highly disperse a catalyst metal into a small particle diameter.

A conventional method of preparing an electrocatalyst for a fuel cell generally includes an impregnation method in which an aqueous solution containing metal salt is injected with a support, the metal salt is caused to be adsorbed onto a support surface, and thereafter, hydrogen gas or a liquid reducing agent is used to reduce the metal salt, thereby preparing an electrocatalyst loaded with catalyst metal particles, or a reductive deposition method in which metal salts, a reducing agent, and a catalytic support are mixed, and these are reduced in a loaded state, whereby the catalyst support is loaded.
For example, the preparing method is disclosed in Patent Document 1, etc.

Regarding a colloid direct loading method in which a colloid whose particle diameter distribution is controlled in advance is prepared, and thereafter, metal particles are caused to be loaded on a support by taking advantage of absorption equilibrium, a preparation method thereof is disclosed in Patent Document 2, etc.

On the other hand, as a method of enhancing a metal loading amount, a method in which certain processing is applied to the support is also reported. For example, Patent Document 3 discloses a method in which a conductive carbon is subjected to a nitric-acid oxidation treatment and a hydrophilization treatment. This Patent Document 3 reports that through activation of a surface of a support, a catalyst metal is loaded only on a surface of the conductive carbon, thereby enhancing a utilization ratio of the catalyst metal at the time of an electrode reaction.

[Patent Document 1] JP-A-9-167622
[Patent Document 2] JP-A-2001-93531
[Patent Document 3] JP-A-2005-025947

### Disclosure of Invention

### Problem to be Solved by the Invention

However, in the above-descried conventional impregnation method, there is a drawback in that when a metal loading amount is increased, spacing between the metal particles becomes small, resulting in aggregation.

In the reductive method in which the reducing agent is used to deposit the metal onto the support, elements such as type, concentration, and deposition rate of the metal salts which serve as a raw material in a stock solution greatly affect a particle diameter of the metal particles of the prepared catalyst, and thus, all of the above-described elements need to be controlled. Due to the effect of a plurality of elements like these, it is significantly difficult to find a condition under which the metal is deposited on the support by a uniform deposition rate during a loading process.

Further, there is a problem in that the metal particles preferentially generated on the support during the loading process act as a reducing catalyst for the metal salts, and thus, the metal particles are generated non-uniformly on the surface of the support.

In the colloid direct loading method, the colloid in which the particle diameter distribution is controlled in advance is prepared, and thereafter, the metal particles are loaded onto the support. In this case, there is a problem in that an interaction between the catalyst metal particles (generally, the particle diameter is several nm) and the support is weak, and thus, when a simple adsorption loading is used, it is difficult to obtain a catalyst of a high loading amount. Further, there is a problem in the electrocatalyst prepared by a metal colloid containing catalyst metal particles having a particle diameter of several nm in that the metal particles are preferentially loaded onto a grain boundary of the support.

On the other hand, a method in which a conductive carbon is subjected to an oxidization treatment and a hydrophilization treatment to enhance solvent affinity of a support is also well known. However, in this method, a strong acid which is difficult to handle is used, and thus, it is difficult to control a treatment process. The hydrophilic nature of the carbon support is expressed by oxidization of the carbon support surface. However, there occurs a problem in that when the oxidization is further progressed to exhibit a higher hydrophilic nature, lowering of a substance transport performance such as gas diffusibility, electronic conductivity, or the like, of the obtained electrocatalyst is caused, thereby expediting degradation of a fuel cell performance over time.

As described above, the conventional methods of preparing an electrocatalyst for a fuel cell have individual problems, and there is a problem in that it is not possible to obtain a electrocatalyst for a fuel cell which does not cause a decline in a performance as an electrocatalyst and in which catalyst metal particles of a high loading amount, of a high diffusion, and of uniform sizes are loaded.

In view of the above-described circumstances, the present invention has been achieved, and an object thereof is to provide an electrocatalyst for a fuel cell loaded with metal particles of a high diffusion and a high loading amount, having excellent uniformity in metal particles size, without being aggregated even by a high loading amount.

### Means for Resolving the Problem

As a result of intensive studies to achieve the above-described object, the present inventor, et at., found that metal particles having a size of 2.0 nm or less had good affinity with a carbon support and could be uniformly loaded. Further, it was found that when in a loading process, for example a method in which an organic substance such as amine, alcohol, or the like was added simultaneously with a metal raw material, and the resultant mixture was removed in a subsequent process was used, spacing between the metal particles could be easily controlled. It was also found that a high loading amount and a high diffusion of catalyst metal particles having a secondary particle structure formed of a plurality of the metal particles having a size of 2.0 nm or less, or catalyst metal particles having a core-shell structure using the metal particles having a size of 2.0 nm or less as a core were possible. It was further found that according to a method of preparing a electrocatalyst for a fuel cell comprising a first loading process for loading a metal particle core having a size of 2.0 nm or less and a second loading process for depositing the metal particles in the vicinity of the metal particle core or growing a metal shell in an external portion of the metal particle core, a catalyst preparation of a high loading amount and a high diffusion was possible. These findings resulted in the achievement of the present invention.

An electrocatalyst for a fuel cell according to the present invention is characterized in that catalyst metal particles loaded on a conductive carbon support have a secondary particle structure formed of a plurality of metal particles having a size of 2.0 nm or less, and the catalyst metal particles having a secondary particle structure have a particle diameter of 6.0 nm or less. Each of primary metal particles forming secondary particles may be the same kind of metal particles or a combination of different kinds of metal particles. Although not particularly limited, a metal such as Ti, V, Fe, Co, Ni, Cu, Zn, Zr, Nb, Ru, Rh, Pd, Ag, In, Sn, Ta, W, Re, Os, Ir, Pt, Au, etc., may be preferably used, for example.

The electrocatalyst for a fuel cell as an embodiment of the present invention is characterized in that the catalyst metal particles loaded on the conductive carbon support have a core-shell structure using metal particles having a size of 2.0 nm or less as a core. Although not particularly limited, for the metal used as the core, Ti, V, Fe, Co, Ni, Cu, Zn, Zr, Nb, Ru, Rh, Pd, Ag, In, Sn, Ta, W, Re, Os, Ir, Pt, Au, etc., may be suitably used, for example. The core metal and the shell metal may be the same kind of metal, but different kinds of metal may also be preferably prepared. In a case of a solid polymeric fuel cell, an electrolyte is a strong acid, and thus, a metal used as the shell may desirably be that which is not dissolved in acid. For example, a metal which becomes the shell by using a transition metal as a core can suitably prepare a catalyst of one kind of precious metal or of a combination of two or more kinds of these.

A particle diameter of the metal particles used as the core desirably is 2.0 nm or less, more desirably 1.5 nm or less, and most desirably 1.0 nm or less. When the particle diameter of the metal particles used as the core becomes larger than 2.0 nm, a particle diameter of catalyst metal particles obtained finally becomes too large. Since a distance between the catalyst metal particles is small, aggregation occurs easily, and as a consequence, a catalyst of a high loading amount and a high dispersion cannot be obtained.

In another embodiment of the present invention, the invention is characterized in that a heat treatment of the catalyst metal particles is carried out to make an alloy of the metals at least partially. The heat treatment of the catalyst metal particles having a secondary particle structure or a core-shell structure can be carried out to easily make an alloy of the metals. In the alloyed catalyst, CO poisoning resistance is improved, and thus, a performance of the electrocatalyst can be enhanced.

The method of preparing an electrocatalyst for a fuel cell of the present invention is characterized by having a first loading step of generating on the conductive carbon support metal particles having its spacing between particles being controlled and having a size of 2.0 nm or less and a second loading step of forming the metal particles in the vicinity of the metal particle core. The metal particles having a size of 2.0 nm or less have strong bonding strength with carbon and can be uniformly dispersed on a surface of the support. Therefore, a particle diameter of the metal particle core at the first loading step desirably is 2.0 nm or less, and more desirably 1.0 nm or less. In this way, a distance between the metal particles can be controlled, and as a result, the metal particles can suitably be used as a catalyst precursor for preparing a final highly-dispersed highly-loaded electrocatalyst.

At the second loading step, the metal particles are formed in the vicinity of the metal particle core or a metal shell is formed in an external portion of the metal particle core. At this time, the metal particles loaded at the first loading step enhance a hydrophilic nature on a carbon particle surface, and thus, the metal particles are preferentially loaded in the vicinity of the metal core. Since the metal particles function as a catalyst for a metal deposition reaction of a reductive deposition method, the metal particles are selectively loaded only in the vicinity of the metal core.

According to the configuration, the spacing between the metal particle cores can be constantly controlled and the metal particles can be uniformly dispersed and loaded. Further, at the second step, the metal particles can be selectively loaded, and while the distance between the metal particles controlled at the first step is kept, a metal loading amount can be easily increased.

A method of loading the metal particle core at the first step may be any method which can control a metal particle diameter to be 2.0 nm or less. For example, an adsorption method, an impregnation method, an ion implantation method, an ion exchange method, a metal colloid loading method, a reductive deposition method, a precipitation deposition method, etc., may be preferably used. A method of controlling the spacing between the particles may preferably include, but not particularly limited to, a method of controlling the spacing of the metal core such as that in which a large organic molecule or the like for inhibiting a particle aggregation is added simultaneously with a metal raw material at the time of loading, and the mixture is removed in a subsequent process, for example, is preferably used.

For the above-described metal which serves as the raw material, colloidal fine particles, metal salts, etc., may be preferably used. To obtain a high-performance electrocatalyst, a raw material not containing chlorine may more preferably be used. These metal particles catalyze a reduction reaction, and in a loading operation at the second loading step, grow uniform catalyst metal particles. At the second step, during the reduction reaction, a reduction capability of a reducing agent and a rate of the reduction reaction are adjusted, and thereby, a metal shell is formed in an external portion of the metal particle core.

### Effects of the Invention

As described above, the method of preparing an electrocatalyst for a fuel cell of the present invention is characterized by being formed of the first step of generating a metal particle core on a conductive support and a second step of selectively growing particles on the metal core. According to the preparing method of the present invention, a loading state of the metal particles at the first step is controlled, and thereby, it becomes possible to design the obtained electrocatalyst. When the particle diameter of the metal particles at the first step is 2.0 nm or less and the loading amount is further controlled, it becomes possible to control a distance between the metal particles and the metal particles, and thus, the accuracy of an electrocatalyst design can be improved as described above.

When the distance between the metal particles and the loading amount are controlled, the aggregation of the catalyst metal can be inhibited, and thus, a catalyst preparation excellent in durability is enabled. Further, preparation of a highly dispersed catalyst can be easily enabled, and thus, a large-scale cost reduction can be expected.

### Brief Description of the Drawings

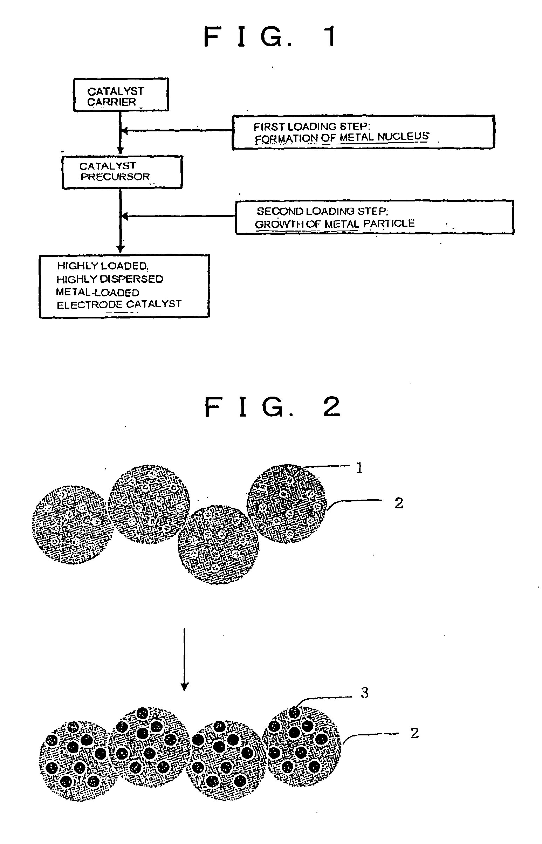

Fig. 1 is a flowchart showing a method of preparing a catalyst according to one embodiment of the present invention.
Fig. 2 is a conceptual diagram of a catalyst precursor and a final catalyst according to one embodiment of the present invention.
Fig. 3 is a transmission electron microscopy (TEM) picture of a catalyst after a first step according to one embodiment(Example 2) of the present invention.

### Explanation of Reference Numerals

1 Metal core for particle growth
2 Conductive carbon support
3 Metal particles of catalyst

### Best Mode for Carrying Out the Invention

Embodiments of the present invention are as follows when described with reference to drawings. The present invention is not limited thereto.

### Examples

### Example 1]

### First step: Creation of metal particle core

[A 100 ml Pt colloidal solution containing metal particles having a particle diameter of 1.0 nm or less and having a concentration of 1.5 wt% was added to Ketjen black powder of 0.1 g, and the resultant mixture was stirred for eight hours at room temperature, thereby causing the metal particles to be loaded. Thereafter, through filtration, washing, and drying for 24 hours at 80°C, Pt/C containing 5.0 wt% of Pt was obtained.

### Second step: Growth of catalyst metal particles

1.0 nm was added to the 5 wt% Pt/C 0.2g obtained in the first step, and the resultant mixture was stirred for five hours at room temperature, thereby causing the metal particles to be loaded. Through filtration, washing, and drying for 24 hours at 80°C, a catalyst A was obtained.

The obtained catalyst was ICP-measured to measure an amount of Pt contained in the catalyst. The result is shown in Table 1. With a catalyst precursor in which the metal core was loaded, a catalyst of a high loading amount was obtained.

### [Comparative Example 1]

A 400 ml Pt colloidal solution containing metal particles having a particle diameter of about 1.0 nm and having a concentration of 1.5 wt% was added to carbon black powder of 0.2 g, and the resultant mixture was stirred for five hours at room temperature, thereby causing the metal particles to be loaded. Through filtration, washing, and drying for 24 hours at 80°C, a catalyst B was obtained.

The obtained catalyst B was ICP-analyzed to measure an amount of Pt contained in the catalyst. The result is shown in Table 1.

An electrochemically active surface area of the obtained catalyst was measured according to the following method. A 4 mg catalyst was measured according to the following method. A 4 mg catalyst was suspended in a water-ethanol mixed solution to prepare ink. The obtained ink of 2.5 µl was dropped so that a 20 µg catalyst was placed on a glassy carbon electrode of 0.07 cm², and thereafter, the resultant material was dried, thereby preparing an electrode for evaluating the electrochemically active surface area. For a catalyst binder, a constant amount of a diluted Nafion solution (a DuPont's 5 wt% Nafion solution) was used. The electrode for evaluating the electrochemically active surface area was soaked in an electrolyte, and a reference electrode and a counter electrode were arranged to calculate the electrochemically active surface area from an electric charge of an adsorption-and-desorption wave of hydrogen, of which amount was obtained by linear cyclic voltammetry. For the electrolyte, 0.5M-H₂SO₄ was used. For the reference electrode, a silver/silver chloride electrode was used, and for the counter electrode, a platinum wire was used. For the linear potential scanning, a potentiostat (Solartron 1260) was used.

**[Table 1]**

| Catalyst name | | Target metal loading amount wt% | Actual metal loading amount wt% | Active surface area of metal m²/g |
|---|---|---|---|---|
| Example 1 | A | 50 | 46 | 34 |
| Comparative Example 1 | B | 50 | 30 | 32 |

A loading amount of the catalyst A was 46% which was close to a target loading amount while that of the catalyst B was only 30%. It was revealed that according to the method of the present invention, an electrocatalyst of a high metal loading amount could be obtained. A TEM observation also revealed that the catalyst A was a secondary particle composed of a plurality of primary particles of 1.0 nm and a particle diameter of the secondary particles was 6.0 nm or less. In the catalyst B, a huge aggregate composed of respective metal particles was present.
An electrochemical measurement revealed that the electrochemically active surface area per unit mass of the catalyst A was higher than that of the catalyst B of the comparative example, and in the catalyst A, the catalyst metals were dispersed more highly.
These results proved that the method of preparing a catalyst of the present invention was effective.

### [Example 2]

### First step: Creation of metal particle core

A 500 ml aqueous dispersion solution containing a carbon support (Ketjen black) of 5.0 g was added with chloroplatinic acid containing platinum of 2.5 g. Further, ethylglycol of 500 g and NaOH of 50 mmol were added. This mixed solution was subjected to a heating and stirring treatment for 24 hours at 60°C. Solids were collected by filtration, and after being washed, the resultant substance was dried for 24 hours at 80°C, thereby obtaining carbon particles in which the metal core was loaded.

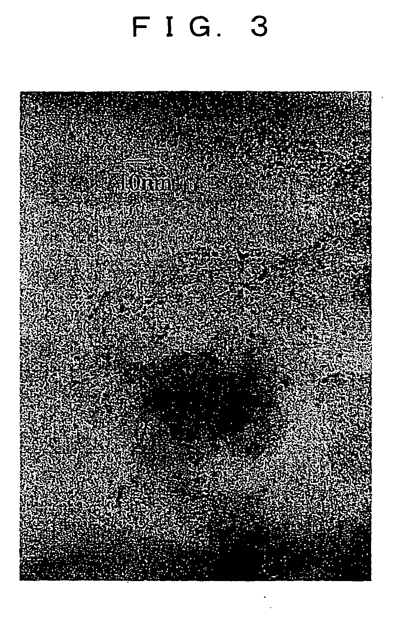

When the carbon particles on which the obtained metal particle core was loaded were TEM-observed, it was observed that the metal particles having a particle diameter of about 0.5 nm were uniformly loaded on the support (Fig. 3). It was confirmed that the metal particles of this size were attached not only in the vicinity of a grain boundary of the carbon but attached to be distributed uniformly also on an entire surface of the support particles. These findings reveal that the metal particle core created in the first step is dispersed uniformly on the support surface without aggregating in the grain boundary.

### Second loading step: Growth of catalyst metal particles

A catalyst precursor obtained from the first loading step was further injected to a solution containing chloroplatinic acid and an organic reducing agent (ethanol), and the resultant mixture was heated with reflux for eight hours at 80°C, thereby obtaining a catalyst C having a core-shell structure. Since the previously loaded metal catalyzes a metal deposition reaction, the metal particles were grown at a lower temperature, and thus, the core-shell structure was formed.
These results revealed that when the secondary particles composed of metal particles having a size of 2.0 nm or less were loaded on the carbon particles and loaded on the metal carbon particles having the core-shell structure, it became useful for preparing an electrocatalyst loaded in a high loading amount and of a high dispersion.
The method of preparing a catalyst formed of the first loading step of loading a minute metal core of 2.0 nm or less on the carbon particles and a second loading step of growing the metal on the metal core is useful for preparing the above-described catalyst.

### Industrial Applicability

A use of the catalyst and a method of preparing the same of the present invention can be applied to manufacturing of an anode catalyst and a cathode catalyst of a fuel cell, and can provide an electrocatalyst for a fuel cell of a high dispersion and a high loading amount.

### The Statement under PCT Article 19(1)

1. The present invention relates to an electrocatalyst for a fuel cell having a high-dispersity and a high-amount of a metal catalyst loaded on a conductive carbon support.
2. On the basis of the description " A particle diameter of the metal particles used as the core desirably is 2.0 nm or less, more desirably 1.5 nm or less, and most desirably 1.0 nm or less" on paragraph [0018], Claim 1 has been amended to limit a particle diameter of the metal particles to the "more desirably range".
3. Besides, the state of the metal catalyst supported in a second support operation is not specified in Claim 1, whereas Claims 2 and 3 have been amended to limit the state to a secondary structure and a core-shell structure respectively.
4. Amended Claim 4 corresponds to the original Claim 3. Amended Claims 5-7 recite the preparing methods according to Amended Claims 2-4 respectively.
5. Prior Art 1 (JP-A-8-141400) discloses the catalyst metal particles having a core-shell structure, the core being composed of primary metal particles having a particle diameter of 2.0 nm and the the shell being composed of at least one kind of metal-shells.
   Prior Art 2 (JP-A-2004-127814) discloses that a particle diameter of the particles is preferably about 2-5 nm or less to deter the particles from aggregating.
   Prior Art 3 (JP-A-2003-92114) discloses that a particle diameter of catalyst particles according to the invention of an electrocatalyst is not particularly limited and that a particle diameter of the catalyst particles of the Fe-Pt/C catalyst body was 2.5 nm.
   However, the finding that a particle diameter of the core metal particles is more preferably 1.5 nm or less is neither described nor suggested.
6. Therefore, we believe that the present invention, which incorporates the finding, fulfill novelty and inventiveness.

## Claims

1. An electrocatalyst for a fuel cell comprising catalyst metal particles and a conductive carbon support, wherein
the catalyst metal particles have a secondary structure composed of at least one kind of primary metal particles having a particle diameter of 0.1 to 2.0 nm, and have a particle diameter of 2.0 to 6.0 nm.

2. The electrocatalyst for a fuel cell according to claim 1, wherein the catalyst metal particles have a core-shell structure having a core composed of primary metal particles having a particle diameter of 0.1 to 2.0 nm and at least one kind of metal shells, and have a particle diameter of 2.0 to 6.0 nm.

3. The electrocatalyst for a fuel cell according to claim 1 or 2, the catalyst metal particles having a secondary structure or a core-shell structure are alloyed at least partially by a heat treatment.

4. A method of preparing an electrocatalyst for a fuel cell according to any of claims 1, 2, or 3, comprising a first loading step and a second loading step, wherein
in the first loading step, metal particles having a particle diameter of 0.1 to 2.0 nm are formed at controlled intervals on a carbon conductive support, and
in the second loading step, other metal particles are loaded in the vicinity of the outer parts of metal particles formed in the first step to form a secondary structure or a core-shell structure composed of the metal particles as a core having a particle diameter of 0.1 to, 2.0 nm is formed.

## Amended claims

### Amended claims under Art. 19.1 PCT

1. An electrocatalyst for a fuel cell comprising catalyst metal particles and a conductive carbon support, wherein
the catalyst metal particles are formed of double-layered particles and the core of which is composed of at least one kind of metal particles having a particle diameter of 0.1 to 1.5 nm, and
the catalyst metal particles have a particle diameter of 2.0 to 6.0 nm.

2. The electrocatalyst for a fuel cell according to claim 1, wherein the catalyst metal particles have a secondary structure having the metal particles attached to the core.

3. The electrocatalyst for a fuel cell according to claim 1, wherein the catalyst metal particles have a core-shell structure having the metal particles attached to the core.

4. The electrocatalyst for a fuel cell according to claim 1, wherein the catalyst metal particles are alloyed at least partially by a heat treatment.

5. A method of preparing an electrocatalyst for a fuel cell, comprising the successive steps of:
(a1) adding a conductive carbon support to a colloidal solution containing at least one kind of first primary metal particles having a particle diameter of 0.1 to 1.5 nm thereby attaching the first primary metal particles to the conductive carbon support,
(b1) water-washing and drying the resultant from operation (a1), and
(c1) adding the conductive carbon support to a colloidal solution containing at least one kind of second primary metal particles having a particle diameter of 0.1 to 1.5 nm thereby attaching the second primary metal particles to the first primary metal particles to obtain the electrocatalyst for a fuel cell having double-layered particles forming a secondary structure attached to the conductive carbon support.

6. A method of preparing an electrocatalyst for a fuel cell, comprising the successive steps of:
(a2) adding a metal compound having at least one kind of metals and an organic reducing agent to an aqueous dispersion solution containing a conductive carbon support thereby reducing the metal compound and attaching core metal particles to the conductive carbon support,
(b2) water-washing and drying a resultant from operation (a2), and
(c2) adding a resultant from operation (b2) to a solution containing a metal compound having at least one kind of metals and an organic reducing agent thereby reducing the metal compound to obtain the electrocatalyst for a fuel cell having double-layered particles forming a core-shell structure having the metal particles as a core on which the shell is attached.

7. The method of preparing an electrocatalyst for a fuel cell according to claim 5 or 6, wherein a heat treatment of the electrocatalyst obtained in operation (c1) or (c2) is further carried out to make an alloy of the metals at least partially.
